# EUROPÄISCHE PATENTSCHRIFT

(11) **EP 2 028 211 B1**
(45) Veröffentlichungstag und Bekanntmachung des Hinweises auf die Patenterteilung: **27.06.2012**
(21) Anmeldenummer: 08013889.4
(22) Anmeldetag: 02.08.2008
(51) Int. Cl.: C08G 65/26

(54) **Verfahren zur Herstellung von Polyolen**
Process for producing polyols
Procédé pour la péparation de polyols

(30) Priorität: 16.08.2007 DE 102007038436
(43) Veröffentlichungstag der Anmeldung: 25.02.2009
(73) Patentinhaber: Bayer MaterialScience AG, 51368 Leverkusen (DE)
(72) Erfinder: Lorenz, Klaus, Dr., 41539 Dormagen (DE); Werner, Arnulf, Dr., 41540 Dormagen (DE); Eichmann, Marcus, Dr., 40547 Düsseldorf (DE)

(56) Entgegenhaltungen:
- EP-A- 0 047 371
- EP-A- 0 318 784
- EP-A- 0 671 361
- WO-A-2004/083276
- US-A- 2 425 845

## Beschreibung

Gegenstand der vorliegenden Erfindung ist ein Verfahren zur Herstellung von Polyolen. Unter Polyolen sind im Folgenden, soweit nicht explizit spezifiziert, sowohl Polyetherpolyole als auch Polyetheresterpolyole zu verstehen.

Zur Herstellung von Polyurethanwerkstoffen wie Weich- oder Hartschaumstoffen bzw. massiven Werkstoffen wie Elastomeren geeignete Polyole werden im Allgemeinen durch Polymerisation geeigneter Alkylenoxide auf polyfunktionelle, d. h. mehrere Zerewitinoff-aktive Wasserstoffatome enthaltende Starterverbindungen erhalten. Für die Durchführung dieser Polymerisationsreaktionen sind seit langem die verschiedensten Verfahren bekannt, die sich zum Teil komplementär ergänzen:

Von großtechnischer Bedeutung ist zum einen die basisch katalysierte Anlagerung von Alkylenoxiden an Starterverbindungen mit Zerewitinoff-aktiven Wasserstoffatomen, zum anderen die gewinnt die Verwendung von Doppelmetallcyanidverbindungen ("DMC-Katalysatoren") für die Durchführung dieser Reaktion zunehmend an Bedeutung. Mit dem Einsatz hochaktiver DMC-Katalysatoren, die z.B. in US-A 5 470 813, EP-A 700 949, EP-A 743 093, EP-A 761 708, WO 97/40086, WO 98/16310 und WO 00/47649 beschrieben sind, ist die Polyetherpolyolherstellung bei sehr geringen Katalysatorkonzentrationen (25 ppm oder weniger) möglich, so dass eine Abtrennung des Katalysators aus dem fertigen Produkt nicht mehr erforderlich ist. Diese Katalysatoren sind jedoch für die Herstellung von kurzkettigen Polyolen oder von Polyolen mit hohen Ethylenoxidgehalten nicht geeignet. Die seit langem bekannten basischen Katalysatoren, z. B. auf Basis von Alkalimetallhydroxiden, erlauben die problemlose Herstellung kurzkettiger und/oder hoch ethylenoxidhaltiger Polyole, der Katalysator muss aber in aller Regel mittels eines separaten Aufarbeitungsschritts aus dem alkalischen Rohpolymerisat entfernt werden. Die durch (Lewis-)Säuren katalysierte Anlagerung von Alkylenoxiden an geeignete Starterverbindungen ist von untergeordneter Bedeutung.

Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt, wie bereits erwähnt in Gegenwart von Alkalimetallhydroxiden, es können aber auch Alkalimetallhydride, Alkalimetallcarboxylate, Erdakalihydroxide oder Amine wie beispielsweise N,N-Dimethylbenzylamin oder Imidazol- bzw. Imidazolderivate eingesetzt werden. Nach erfolgter Anlagerung der Alkylenoxide müssen die polymerisationsaktiven Zentren an den Polyetherketten deaktiviert werden. Hierfür sind verschiedene Vorgehensweisen möglich. Beispielsweise kann mit verdünnten Mineralsäuren wie Schwefelsäure oder Phosphorsäure neutralisiert werden. Die Stärke der zweiten Dissoziationsstufe der Schwefelsäure reicht zur Protonierung der durch Hydrolyse der aktiven Alkoholatgruppen entstehenden Alkalimetallhydroxide aus, so dass pro mol eingesetzter Schwefelsäure 2 mol Alkoholatgruppen neutralisiert werden können. Phosphorsäure hingegen muss äquimolar zur Menge der zu neutralisierenden Alkoholatgruppen eingesetzt werden. In beiden Fällen müssen die bei der Neutralisation und/oder während der Abdestillation des Wassers entstehenden Salze mittels Filtrationsverfahren abgetrennt werden. Destillations- und Filtrationsprozesse sind zeit- und energieintensiv und zudem in manchen Fällen nicht gut reproduzierbar. Es sind daher viele Verfahren entwickelt worden, die ohne Filtrationsschritt und in vielen Fällen auch ohne Destillationsschritt auskommen: Die Neutralisation mit Hydroxycarbonsäuren wie beispielsweise Milchsäure wird in WO 9820061 und US-A 2004167316 für die Aufarbeitung kurzkettiger Polyole für Hartschaumanwendungen beschrieben, es handelt sich hierbei um weitverbreitete und gut etablierte Verfahren. In US-A 4521548 wird beschrieben, wie die polymerisationsaktiven Zentren in ähnlicher Weise durch Umsetzung mit Ameisensäure deaktiviert werden können. Die nach Neutralisation mit Hydroxycarbonsäuren bzw. Ameisensäure entstehenden Metallcarboxylate sind in den Polyetherpolyolen klar löslich. Nachteilig bei diesen Verfahren ist jedoch die für viele Polyurethananwendungen unerwünschte katalytische Aktivität der in den Produkten verbleibenden Salze. In JP-A 10-30023 und US-A 4110268 werden zur Neutralisation daher aromatische Sulfonsäuren bzw. organische Sulfonsäuren eingesetzt, die ebenfalls in den Polyetherpolyolen lösliche Salze bilden, welche aber weniger basisch sind und sich durch geringere katalytische Aktivität auszeichnen. Ein entscheidender Nachteil sind hier die hohen Kosten der Sulfonsäuren. Die Aufarbeitung mittels saurer Kationenaustauscher, wie sie in DE-A 100 24 313 beschrieben ist, erfordert den Einsatz von Lösungsmitteln und deren destillative Abtrennung und ist somit ebenfalls mit hohen Kosten verbunden. Phasentrennverfahren erfordern lediglich einen Hydrolyse-, jedoch keinen Neutralisationsschritt und sind beispielsweise beschrieben in WO 0114456, JP-A 6-157743, WO 9620972 und US-A 3823145. Mit dem Einsatz von Koalescern oder Zentrifugen wird die Phasentrennung der Polyetherpolyole von der alkalischen wässrigen Phase unterstützt, oft müssen auch hier Lösungsmittel zugesetzt werden, um den Dichteunterschied zwischen der Polyetherphase und der Wasserphase zu erhöhen. Solche Verfahren sind nicht für alle Polyetherpolyole geeignet, insbesondere versagen sie bei kurzkettigen Polyetherpolyolen oder Polyetherpolyolen mit hohen Ethylenoxidanteilen.

Die Aufarbeitung von Polyetheresterpolyolen kann nicht nach derartigen Phasentrennprozessen betrieben werden, da der lange Kontakt der Polyetheresterketten mit der alkalischen wässrigen Phase unweigerlich zu irreversibler Hydrolyse der Esterbindungen führen würde. Der Einsatz von Lösungsmitteln ist kostenintensiv und Zentrifugen erfordern einen hohen Instandhaltungsaufwand.

Bei aminisch katalysierten Alkylenoxidadditionsreaktionen kann auf eine weitere Aufarbeitung verzichtet werden, sofern die Anwesenheit der Amine in diesen Polyolen die Herstellung von Polyurethanwerkstoffen nicht beeinträchtigt. Über aminische Katalyse können nur Polyole mit verhältnismäßig niedrigen Äquivalentgewichten erhalten werden, siehe hierzu beispielsweise Ionescu et al. in "Advances in Urethane Science & Technology", 1998, 14, S. 151-218.

Aufgabe der vorliegenden Erfindung war es daher, ein preiswertes Aufarbeitungsverfahren für unter Alkali- oder Erdalkalihydroxid, -carboxylat oder -hydridkatalyse hergestellte ethylenoxidhaltige Polyole zu finden, welches die Nachteile der Verfahren des Standes der Technik nicht aufweist. Insbesondere sollen die Polyole niedrige Basengehalte aufweisen, was ihre breite einsatzfähigkeit sowohl in "one shot"- als auch in Präpolymeranwendungen gewährleistet.

Die Aufgabe konnte gelöst werden, indem die Neutralisation der alkalischen, polymerisationsaktiven Zentren des rohen Alkylenoxidadditionsproduktes durch Zugabe von Schwefelsäure derart durchgeführt wird, dass von 66 mol-% bis 100 mol-% der eingesetzten Säure nur die erste Dissoziationsstufe zur Neutralisation der im Rohpolymerisat enthaltenden Katalysatormenge wirksam wird. Dies kann beispielsweise dadurch erzielt werden, dass mindestens 50% mehr Säure als zur Neutralisation des basischen Katalysators notwendig wäre, eingesetzt wird. Man erhält nach dieser Vorgehensweise überraschenderweise völlig klare Produkte mit geringem Basengehalt. Hierbei ist es unerheblich, ob der eigentlichen Neutralisation ein Hydrolyseschritt vorgeschaltet ist oder nicht. Die durch das erfindungsgemäße Verfahren erzielte Verbesserung der Produktqualität wirkt sich aber insbesondere dann aus, wenn der eigentlichen Neutralisation ein Hydrolyseschritt vorgeschaltet ist, da die so erhaltenen Produkte sonst stärker zu Trübung neigen. Die Methode ist auf lang- und kurzkettige Polyetherpolyole anwendbar, d. h. der OH-Zahl-Bereich der Endprodukte erstreckt sich von etwa 20 mg KOH/g bis etwa 1.000 mg KOH/g. Die Struktur der Polyetherketten, d. h. die Zusammensetzung des bei der Herstellung der Polyole eingesetzten Alkylenoxidgemisches, kann ebenfalls variiert werden. Der Anteil von Ethylenoxid am dosierten Alkylenoxid sollte mindestens 10 Gew.-% betragen, bevorzugt mindestens 20 Gew.-%, besonders bevorzugt mindestens 30 Gew.-% und ganz besonders bevorzugt mehr als 50 Gew.-%.

### Im Einzelnen wird das erfindungsgemäße Verfahren wie folgt durchgeführt:

Die Starterverbindungen mit Zerewitinoff-aktiven Wasserstoffatomen werden üblicherweise im Reaktor vorgelegt und mit dem Katalysator, also dem Alkalimetallhydroxid, Alkali-, Erdalkalimetallhydrid, Alkali-, Erdalkalimetallcarboxylat oder Erdakalihydroxid, versetzt. Bevorzugt werden Alkalimetallhydroxide eingesetzt, besonders bevorzugt ist Kaliumhydroxid. Der Katalysator kann der Starterverbindung als wässrige Lösung oder als Feststoff zugeführt werden. Die auf die Endproduktmenge bezogene Katalysatorkonzentration beträgt 0,004 bis 0,5 Gew.-%, bevorzugt 0,01 bis 0,1 Gew.-%, besonders bevorzugt 0,025 bis 0,07 Gew.-%. Das Lösungswasser und/oder das bei der Reaktion der Zerewitinoff-aktiven Wasserstoffatome mit dem Katalysator freigesetzte Wasser kann vor Beginn der Dosierung des oder der Alkylenoxide(s) im Vakuum bei erhöhter Temperatur, bevorzugt bei Reaktionstemperatur, entfernt werden.

Als basische Katalysatoren können auch vorgefertigte Alkylenoxid-Additionsprodukte von Zerewitinoff-aktive Wasserstoffatome enthaltenden Starterverbindungen mit Alkoxylatgehalten von 0,05 bis 50 Äquivalenz-% eingesetzt werden ("polymere Alkoxylate"). Unter dem Alkoxylatgehalt des Katalysators ist der durch eine Base durch Deprotonierung entfernte Anteil zerewitinoff-aktiver Wasserstoffatome an allen ursprünglich im Alkylenoxid-Additionsprodukt des Katalysators vorhanden gewesenen zerewitinoff-aktiven Wasserstoffatomen zu verstehen. Die Einsatzmenge des polymeren Alkoxylates richtet sich natürlich nach der für die Endproduktmenge angestrebten Katalysatorkonzentration, wie im vorangehenden Abschnitt beschrieben.

Die im Reaktor vorgelegten Starterverbindungen werden nun unter Inertgasatmosphäre bei Temperaturen von 80-180 °C, bevorzugt bei 100 - 170 °C mit Alkylenoxiden zur Reaktion gebracht, wobei die Alkylenoxide in der gängigen Weise dem Reaktor kontinuierlich derart zugeführt werden, dass die sicherheitstechnischen Druckgrenzen des verwendeten Reaktorsystems nicht überschritten werden. Üblicherweise werden solche Reaktionen im Druckbereich von 10 mbar bis 10 bar durchgeführt. Nach Ende der Alkylenoxiddosierphase schließt sich normalerweise eine Nachreaktionsphase an, in der restliches Alkylenoxid abreagiert. Das Ende dieser Nachreaktionsphase ist erreicht, wenn kein weiterer Druckabfall im Reaktionskessel feststellbar ist. Das alkalische Alkylenoxidadditionsprodukt kann nun durch Wasser zunächst hydrolysiert werden. Dieser Hydrolyseschritt ist jedoch für die Durchführung des erfindungsgemäßen Verfahrens nicht essentiell. Die Wassermenge beträgt hierbei bis zu 15 Gew.-%, bezogen auf die Menge des alkalischen Alkylenoxidadditionsproduktes. Die Neutralisation der alkalischen, polymerisationsaktiven Zentren des rohen, gegebenenfalls hydrolysierten Alkylenoxidadditionsproduktes erfolgt nun durch Zugabe von Schwefelsäure derart, dass von 66 mol-% bis 100 mol-%, bevorzugt von 75 mol-% bis 90 mol-% der eingesetzten Säure nur die erste Dissoziationsstufe zur Neutralisation der im Rohpolymerisat enthaltenden Katalysatormenge wirksam wird. Dies kann beispielsweise dadurch erzielt werden, dass mindestens 50% mehr Säure als zur Neutralisation des basischen Katalysators notwendig wäre, eingesetzt wird. Die Temperatur kann bei Hydrolyse und Neutralisation in weiten Bereichen variiert werden, Grenzen können hierbei durch die Korrosionsbeständigkeit der Materialien der Neutralisationskessel oder durch den Polyolaufbau gegeben sein. Sind hydrolyseempfindliche Gruppen, wie beispielsweise Estergruppen, in den Produkten zugegen, kann beispielsweise bei Raumtemperatur neutralisiert werden. In solchen Fällen empfiehlt es sich auch, auf einen vorgeschalteten, separaten Hydrolyseschritt zu verzichten. Nach erfolgter Neutralisation können Wasserspuren, die durch Zugabe verdünnter Säuren eingebracht wurden bzw. überschüssiges Hydrolysewasser im Vakuum entfernt werden. Den Produkten können während oder nach der Neutralisation Alterungsschutzmittel bzw. Antioxidantien zugesetzt werden. Weitere Aufarbeitungsschritte, wie beispielsweise eine Filtration des Produktes, sind nicht notwendig. Die klaren Endprodukte weisen bevorzugt Basengehalte von weniger als 100 ppm, besonders bevorzugt von weniger als 50 ppm auf.

Geeignete Starterverbindungen mit Zerewitinoff-aktiven Wasserstoffatomen weisen meist Funktionalitäten von 1 bis 8 auf, in bestimmten Fällen aber auch Funktionalitäten bis 35. Ihre Molmassen betragen von 60 g/mol bis 1.200 g/mol Neben hydroxyfunktionellen Startern können auch aminofunktionelle Starter eingesetzt werden. Beispiele für hydroxyfunktionelle Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen. Es können natürlich auch Gemische verschiedener Starterverbindungen eingesetzt werden.

Ferner können dem Prozess auch vorgefertigte Alkylenoxidadditionsprodukte der erwähnten Starterverbindungen, also Polyetherpolyole mit OH-Zahlen von 20 bis 1.000 mg KOH/g, bevorzugt 250 bis 1.000 mg KOH/g, zugesetzt werden. Von den bei der Herstellung der vorgefertigten Alkylenoxidadditionsprodukte eingesetzten Alkylenoxiden sollten, bezogen auf das Endprodukt, mindestens 10, bevorzugt mindestens 20, besonders bevorzugt mindestens 30 und ganz besonders bevorzugt mehr als 50 Gew.-% Ethylenoxid sein. In einer bevorzugten Ausführungsform sollte der Anteil an Ethylenoxid am bei der Herstellung der vorgefertigten Alkylenoxidadditionsprodukte dosierten Alkylenoxid mindestens 10 Gew.-%, bevorzugt mindestens 20 Gew.-%, besonders bevorzugt mindestens 30 Gew.-% und ganz besonders bevorzugt mindestens 50 Gew.-% betragen. Auch ist es möglich, im erfindungsgemäßen Prozess neben den Starterverbindungen auch Polyesterpolyole mit OH-Zahlen im Bereich von 6 bis 800 mg KOH/g mit dem Ziel der Polyetheresterherstellung einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Das erfindungsgemäße Verfahren eröffnet eine hochwirtschaftliche Möglichkeit zur Herstellung solcher Polyole, indem vor oder während der Addition der Alkylenoxide Triglyceride wie beispielsweise Sojaöl, Rapsöl, Palmkernöl, Palmöl, Leinöl, Sonnenblumenöl, Heringsöl, Sardinenöl, Lesquerellaöl und Ricinusöl dem Prozess in Mengen von 10 - 80 Gew.-%, bezogen auf die Endproduktmenge, zugesetzt werden. Man erhält Polyetheresterpolyole, in deren Struktur die Öle vollständig eingebaut sind, so dass sie im Endprodukt nicht mehr oder nur in sehr geringen Mengen nachgewiesen werden können.

Die erwähnten, als Katalysator verwendbaren polymeren Alkoxylate werden in einem separaten Reaktionsschritt durch Alkylenoxidaddition an zerewitinoff-aktive Wasserstoffatome enthaltende Starterverbindungen hergestellt. Üblicherweise wird bei der Herstellung des polymeren Alkoxylates ein Alkali- oder Erdalkalimetallhydroxid, z. B. KOH, in Mengen von 0,1 bis 1 Gew.-%, bezogen auf die herzustellende Menge als Katalysator, eingesetzt, das Reaktionsgemisch, falls erforderlich, im Vakuum entwässert, die Alkylenoxidadditionsreaktion unter Inertgasatmosphäre bei 100 bis 170 °C bis zum Erreichen einer OH-Zahl von 150 bis 1.200 mg KOH/g durchgeführt und danach gegebenenfalls durch Zugabe weiteren Alkali- oder Erdalkalimetallhydroxids und anschließendem Entwässern auf die obengenannten Alkoxylatgehalte von 0,05 bis 50 Äquivalenz-% eingestellt. Solchermaßen hergestellte polymere Alkoxylate können separat unter Inertgasatmosphäre gelagert werden. Sie werden im erfindungsgemäßen Verfahren besonders dann bevorzugt verwendet, wenn Einsatzstoffe Verwendung finden, die unter alkalischen Bedingungen hydrolyseempfindlich sind oder die Menge an niedermolekularem Starter bei der Herstellung langkettiger Polyole nicht ausreichend ist, um zu Reaktionsbeginn eine ausreichende Durchmischung des Reaktionsgemisches zu gewährleisten. Ferner neigen bestimmte niedermolekulare Starter zur Bildung schwerlöslicher Alkali- oder Erdalkalimetallsalze; in solchen Fällen empfiehlt sich die vorgeschaltete Überführung des Starters nach dem oben geschilderten Verfahren in ein polymeres Alkoxylat ebenfalls. Die Menge des im erfindungsgemäßen Verfahren eingesetzten polymeren Alkoxylates wird üblicherweise so bemessen, dass sie einer auf die Menge des herzustellenden, erfindungsgemäßen Endproduktes bezogenen Alkali- oder Erdalkalimetallhydroxidkonzentration von 0,004 bis 0,5 Gew.-%, bevorzugt 0,01 bis 0,1 Gew.-%, besonders bevorzugt 0,025 bis 0,07 Gew.-% entspricht. Die polymeren Alkoxylate können natürlich auch als Gemische eingesetzt werden.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid eingesetzt. Wie bereits erwähnt, sollte der Anteil von Ethylenoxid mindestens 10, bevorzugt mindestens 20, besonders bevorzugt mindestens 30 und ganz besonders bevorzugt mehr als 50 Gew.-%, bezogen auf die Gesamtmenge der dosierten Alkylenoxide, betragen. Werden die im vorangehenden Abschnitt erwähnten polymeren Alkoxylate als Katalysatoren verwendet, oder die oben erwähnten, vorgefertigten Alkylenoxidadditionsprodukte als Komponenten im Startergemisch eingesetzt, so gehen die bei ihrer Herstellung verwendeten Ethylenoxidmengen in die Berechnung des Gesamtethylenoxidgehaltes mit ein. Das Ethylenoxid kann im Gemisch mit den anderen Alkylenoxiden oder blockweise als Anfangs-, Mittel- oder Endblock dosiert werden. Produkte mit Ethylenoxidendblöcken sind beispielsweise durch erhöhte Konzentrationen an primären Endgruppen gekennzeichnet, welche den Systemen die für Formschaumanwendungen notwendige Isocyanatreaktivität verleihen.

Die alkalischen Rohpolyole weisen im Allgemeinen OH-Zahlen von 20 bis 1.000 mg KOH/g, bevorzugt OH-Zahlen von 28 bis 700 mg KOH / g auf.

Die Aufarbeitung der alkalischen Rohpolyole erfolgt nun durch Zugabe von Schwefelsäure derart, dass von 66 mol-% bis 100 mol-%, bevorzugt von 75 mol-% bis 90 mol-% der eingesetzten Säure nur die erste Dissoziationsstufe zur Neutralisation der im Rohpolymerisat enthaltenden Katalysatormenge wirksam wird. Dies kann beispielsweise dadurch erzielt werden, dass mindestens 50% mehr Säure als zur Neutralisation des basischen Katalysators notwendig wäre, eingesetzt wird. Die Neutralisation kann bei Reaktionstemperatur durchgeführt werden, sind hydrolyseempfindliche funktionelle Gruppen wie beispielsweise Estergruppen zugegen, kann auch bei deutlich tieferer Temperatur, beispielsweise bei Raumtemperatur, neutralisiert werden.

Der eigentlichen Neutralisation kann ein separater Hydrolyseschritt vorgeschaltet sein, der für das erfindungsgemäße Verfahren jedoch nicht von essentieller Bedeutung ist. Die Wassermenge beträgt bei einem solchen Hydrolyseschritt bis zu 15 Gew.-%, bezogen auf die Menge des alkalischen Alkylenoxidadditionsproduktes. Die durch das erfindungsgemäße Verfahren erzielte Verbesserung der Produktqualität wirkt sich insbesondere dann aus, wenn der eigentlichen Neutralisation ein Hydrolyseschritt vorgeschaltet ist, da die so erhaltenen Produkte sonst stärker zu Trübung neigen.

Die nach dem erfindungsgemäßen Verfahren erhältlichen Polyole weisen bevorzugt Basengehalte von weniger als 100 ppm, besonders bevorzugt von weniger als 50 ppm auf und können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten. Ebenfalls möglich ist die Herstellung sogenannter Isocyanat-Prepolymere, bei deren Herstellung ein molares Verhältnis von Isocyanatgruppen zu Hydroxygruppen von größer 1 verwendet wird, so dass das Produkt freie Isocyanatfunktionalitäten enthält. Diese werden erst bei der Herstellung des eigentlichen Endproduktes in einem oder mehreren Schritten umgesetzt.

Zur Herstellung dieser Materialien werden die Polyole gegebenenfalls mit weiteren isocyanatreaktiven Komponenten gemischt und mit organischen Polyisocyanaten, gegebenenfalls in Gegenwart von Treibmitteln in Gegenwart von Katalysatoren, gegebenenfalls in Gegenwart anderer Zusatzstoffe wie z. B. Zellstabilisatoren, zur Reaktion gebracht.

### Beispiele für die Herstellung der Polyole

### Eingesetzte Rohstoffe:

### Sojaöl:

Sojaöl (raffiniert, d. h. entlecithiniert, neutralisiert, entfärbt und dampfgestrippt), bezogen von der Sigma-Aldrich Chemie GmbH, München.

### Herstellung des polymeren Alkoxylates 1:

In einen 10 l Laborautoklaven wurden unter Stickstoffatmosphäre 1278,5 g Trimethylolpropan und 21,7 g einer 45 Gew.-%igen Lösung von KOH in Wasser gegeben. Der Autoklav wurde verschlossen, die Rührerdrehzahl auf 450 U/min. eingestellt und man heizte auf 107 °C auf. Der Druck wurde auf 100 mbar abgesenkt und 653,4 g Propylenoxid wurden über einen Zeitraum von 3 h in den Autoklaven dosiert. Nach einer Nachreaktionszeit von 30 min. bei 107°C wurde der Ansatz 30 min. im Vakuum ausgeheizt. Nach Abkühlen auf Raumtemperatur wurden unter Stickstoffatmosphäre 45,1 g einer 45 Gew.-%igen Lösung von KOH in Wasser zugegeben. Man erwärmte auf 107 °C und entfernte das Wasser im Vakuum, bis ein Druck von 10 mbar erreicht war. Sodann wurden 4063,6 g Propylenoxid über einen Zeitraum von 8,5 h bei 107°C eindosiert, nach einer Nachreaktionszeit von 120 min. wurde für 30 min. im Vakuum ausgeheizt. Nach Abkühlen auf Raumtemperatur wurden unter Stickstoffatmosphäre 539,4 g einer 45 Gew.-%igen Lösung von KOH in Wasser zugegeben. Man erwärmte auf 107 °C und entfernte das Wasser im Vakuum, bis ein Druck von 10 mbar erreicht war. Die Alkalizahl des polymeren Alkoxylates 1 beträgt 44,1 mg KOH / g, seine OH-Zahl 260 mg KOH / g. Der Alkoxylatgehalt beträgt 17%.

### Herstellung des polymeren Alkoxylates 2:

In einen 10 1 Laborautoklaven wurden unter Stickstoffatmosphäre 3677,2 g Glycerin und 18,65 g einer 45 Gew.-%igen Lösung von KOH in Wasser gegeben. Der Autoklav wurde verschlossen, die Rührerdrehzahl auf 450 U/min. eingestellt und man heizte auf 110 °C auf. Der Druck wurde auf 100 mbar abgesenkt und 2313,7 g Propylenoxid wurden über einen Zeitraum von 4,6 h in den Autoklaven dosiert. Nach einer Nachreaktionszeit von 180 min. bei 110 °C wurde der Druck langsam wieder auf 100 mbar abgesenkt und der Ansatz schließlich im Vakuum von Wasser befreit, bis bei einer Temperatur von 110°C ein Druck von weniger als 10 mbar erreicht war. Die Alkalizahl des polymeren Alkoxylates 2 beträgt 1,4 mg KOH / g, seine OH-Zahl 1121 mg KOH / g. Der Alkoxylatgehalt beträgt 0,125%.
**Irganox^{®} 1076:**
Octadecyl-3-(3,5-di-tert.butyl-4-hydroxyphenyl)propionat

### Beispiel 1

In einen 10 1 Laborautoklaven wurden unter Stickstoffatmosphäre 27,6 g polymeres Alkoxylat 1 und 1213,0 g Trimethylolpropan gegeben. Der Autoklav wurde verschlossen und mit 1,5 bar Stickstoffdruck beaufschlagt. Man erwärmte unter Rühren (450 U/min) auf 150 °C und dosierte 4646,9 g Ethylenoxid bei einer Rührerdrehzahl von ebenfalls 450 U/min. über einen Zeitraum von 13,2 h in den Autoklaven. Während dieser Dosierzeit wurde zwischenzeitlich ein Reaktordruck von 4 bar erreicht, man ließ dann 25 min. abreagieren, senkte den Druck durch Ablassen des Stickstoffs auf 2,55 bar und nahm die Ethylenoxiddosierung wieder auf. Nach Ende der Ethylenoxiddosierung schloss sich eine Nachreaktionszeit von 45 min. Dauer an. Nach einer Ausheizzeit von 30 min im Vakuum und Abkühlen auf Raumtemperatur wurden dem Ansatz 2 Anteile (Beispiele 1A und 1B) für Neutralisationsversuche entnommen. Die auf KOH berechnete Katalysatorkonzentration betrug 207 ppm.

### Beispiel 1A (Vergleich)

936 g des Produktes aus Beispiel 1 wurden bei 80 °C mit 75 g destilliertem Wasser, 1,4571 g 11,83 %iger Schwefelsäure und 1,038 g Irganox^{®} 1076 versetzt und 1 h bei 80 °C verrührt. Das Produkt wurde danach 1 h bei 18 mbar (Wasserstrahlvakuum) und anschliessend bei 110 °C 3 h bei 1 mbar entwässert. Danach zeigte das Produkt eine schwache Trübung.

### Beispiel 1B

1952,5 g des Produktes aus Beispiel 1 wurden bei 80 °C mit 156 g destilliertem Wasser, 5,076 g 11,83 %iger Schwefelsäure und 2,155 g Irganox^{®} 1076 versetzt und 1 h bei 80 °C verrührt. Das Produkt wurde danach 1 h bei 18 mbar (Wasserstrahlvakuum) und anschliessend bei 110 °C 3 h bei 1 mbar entwässert. Man erhielt ein klares Produkt.

### Beispiel 2

In einen 2 1 Laborautoklaven wurden unter Stickstoffatmosphäre 5,49 g polymeres Alkoxylat 1 und 243,7 g Trimethylolpropan gegeben. Der Autoklav wurde verschlossen und sein Inhalt unter Rühren (700 U/min) auf 150 °C erwärmt. Man dosierte 956,9 g Ethylenoxid bei einer Rührerdrehzahl von ebenfalls 700 U/min. über einen Zeitraum von 6 h in den Autoklaven. Gegen Ende der Ethylenoxiddosierphase wurde ein Reaktordruck von 1,9 bar erreicht. Nach Ende der Ethylenoxiddosierung schloss sich eine 20 minütige Nachreaktionszeit an. Nach einer Ausheizphase von 30 min Dauer im Vakuum wurde dem Ansatz zwei Anteile (Beispiele 2A und 2B) für Neutralisationsversuche entnommen. Die auf KOH berechnete Katalysatorkonzentration betrug 200 ppm.

### Beispiel 2A

562,5 g des Produktes aus Beispiel 2 wurden bei 80 °C mit 56 g destilliertem Wasser, 1,4150 g 11,85 %iger Schwefelsäure und 0,622 g Irganox^{®} 1076 versetzt und 1 h bei 80 °C verrührt. Das Produkt wurde danach 1 h bei 18 mbar (Wasserstrahlvakuum) und anschliessend bei 110 °C 3 h bei 1 mbar entwässert. Man erhielt ein klares Produkt.

### Beispiel 2B (Vergleich)

556,5 g des Produktes aus Beispiel 2 wurden bei 80 °C mit 56 g destilliertem Wasser und 5,9675 g 3,293 %iger Phosphorsäure versetzt und 1/2 h bei 80 °C verrührt. Nach Zugabe von 0,622 g Irganox^{®} 1076 wurde das Produkt 1 h bei 18 mbar (Wasserstrahlvakuum) und anschließend bei 110 °C 3 h bei 1 mbar entwässert. Man erhielt ein trübes Produkt.

### Beispiel 3

In einen 2 1 Laborautoklaven wurden unter Stickstoffatmosphäre 586,8 g Trimethylolpropan und 0,638 g einer 45 Gew.-%igen Lösung von KOH in Wasser gegeben. Der Autoklav wurde verschlossen und sein Inhalt unter Rühren (700 U/min) auf 150 °C erwärmt. Man dosierte 595,5 g Ethylenoxid bei einer Rührerdrehzahl von ebenfalls 700 U/min. über einen Zeitraum von 3,7 h in den Autoklaven. Die Dosierung wurde bei einem Druck von 1,5 bar gestartet; gegen Ende der Ethylenoxiddosierphase wurde ein Reaktordruck von 3,0 bar erreicht. Nach Ende der Ethylenoxiddosierung schloss sich eine Nachreaktionszeit von 30 min. Dauer an. Nach einer Ausheizphase von 30 min Dauer im Vakuum wurde der Ansatz unter Rühren auf 80 °C abgekühlt. Die Katalysatorkonzentration (KOH) betrug 238 ppm. Man setzte 113 ml destilliertes Wasser und 3,586 g einer 11,845 %igen Schwefelsäure zu und rührte den Ansatz ½ h bei 80 °C. Sodann wurden 0,905 g Irganox^{®} 1076 zugegeben und danach 1 h bei 18 mbar (Wasserstrahlvakuum) und anschließend 3 h bei 110 °C und 1 mbar entwässert. Man erhielt ein klares Produkt.

### Beispiel 4

In einen 10 1 Laborautoklaven wurden unter Stickstoffatmosphäre 2627,4 g Trimethylolpropan und 2,695 g einer 44,8 Gew.-%igen Lösung von KOH in Wasser gegeben. Der Autoklav wurde verschlossen und sein Inhalt unter Rühren (450 U/min) auf 150 °C erwärmt.

Man dosierte 3372,6 g Propylenoxid bei einer Rührerdrehzahl von ebenfalls 450 U/min. über einen Zeitraum von 5,03 h in den Autoklaven. Die Propylenoxiddosierung wurde bei einem Druck von 1,1 bar begonnen, während der Dosierphase wurde ein Druck von 4,95 bar erreicht. Nach Ende der Propylenoxiddosierung schloss sich eine Nachreaktionszeit von 5 h Dauer an. Der Ansatz wurde 30 min im Vakuum ausgeheizt und nach Abkühlen auf Raumtemperatur in drei Teile (Beispiele 4 A, 4 B und 4 C) geteilt. Die Katalysatorkonzentration (KOH) betrug 200 ppm.

### Beispiel 4A (Vergleich)

2081,4 g des Produktes aus Beispiel 4 wurden bei 80 °C mit 208 g destilliertem Wasser und 4,652 g 11,85 %iger Schwefelsäure versetzt und 0,5 h bei 80 °C verrührt. Nach Zugabe von 1,789 g Irganox^{®} 1076 wurde das Produkt bei 110 °C 3 h bei 1 mbar entwässert. Man erhielt ein trübes Produkt.

### Beispiel 4B (Vergleich)

2146,9 g des Produktes aus Beispiel 4 wurden bei 80 °C mit 214 g destilliertem Wasser und 5,619 g 11,85 %iger Schwefelsäure versetzt und 0,5 h bei 80 °C verrührt. Nach Zugabe von 1,832 g Irganox^{®} 1076 wurde das Produkt bei 110 °C 3 h bei 1 mbar entwässert. Man erhielt ein trübes Produkt.

### Beispiel 4C (Vergleich)

1753,3 g des Produktes aus Beispiel 4 wurden bei 80 °C mit 175 g destilliertem Wasser und 5,205 g 11,85 %iger Schwefelsäure versetzt und 1 h bei 80 °C verrührt. Nach Zugabe von 1,516 g Irganox^{®} 1076 wurde das Produkt bei 110 °C 3 h bei 1 mbar entwässert. Man erhielt ein leicht trübes Produkt.

### Beispiel 5

In einen 10 l Laborautoklaven wurden unter Stickstoffatmosphäre 68,3 g polymeres Alkoxylat 1 und 1202,1 g Trimethylolpropan gegeben. Der Autoklav wurde verschlossen und mit 1,5 bar Stickstoffdruck beaufschlagt. Man erwärmte unter Rühren (450 U/min) auf 150 °C und dosierte 4730,1 g Ethylenoxid bei einer Rührerdrehzahl von ebenfalls 450 U/min. über einen Zeitraum von 13,45 h in den Autoklaven. Während dieser Dosierzeit wurde zwischenzeitlich ein Reaktordruck von 4 bar erreicht, man ließ dann 25 min. abreagieren, senkte den Druck durch Ablassen des Stickstoffs auf 2,55 bar und nahm die Ethylenoxiddosierung wieder auf. Nach Ende der Ethylenoxiddosierung schloss sich eine Nachreaktionszeit von 33 min. Dauer an. Schließlich wurde das Produkt über einen Zeitraum von 30 min. im Vakuum ausgeheizt und anschließend auf Raumtemperatur abgekühlt. Die auf KOH berechnete Katalysatorkonzentration betrug 500 ppm. 1956 g des Produktes wurden bei 80 °C mit 196 g destilliertem Wasser und 14,589 g 11,85 %iger Schwefelsäure versetzt und 0,5 h bei 80 °C verrührt. Nach Zugabe von 2,170 g Irganox^{®} 1076 wurde das Produkt bei 110 °C 3 h bei 1 mbar entwässert. Man erhielt ein klares Produkt.

### Beispiel 6

In einen 10 1 Laborautoklaven wurden unter Stickstoffatmosphäre 27,2 g polymeres Alkoxylat 1 und 1212,5 g Trimethylolpropan gegeben. Der Autoklav wurde verschlossen und mit 1,9 bar Stickstoffdruck beaufschlagt. Man erwärmte unter Rühren (450 U/min) auf 150 °C und dosierte 4761,1 g Ethylenoxid bei einer Rührerdrehzahl von ebenfalls 450 U/min. über einen Zeitraum von 7,7 h in den Autoklaven. Während dieser Dosierzeit wurde zwischenzeitlich ein Reaktordruck von 4,9 bar erreicht, man ließ dann 53 min. abreagieren, senkte den Druck durch Ablassen des Stickstoffs auf 2,5 bar und nahm die Ethylenoxiddosierung wieder auf. Nach Ende der Ethylenoxiddosierung schloss sich eine Nachreaktionszeit von 1,6 h Dauer an. Nach einer Ausheizzeit von 30 min im Vakuum und Abkühlen auf Raumtemperatur wurden dem Ansatz 3 Anteile (Beispiele 6A, 6B und 6C) für Neutralisationsversuche entnommen. Die auf KOH berechnete Katalysatorkonzentration betrug 200 ppm.

### Beispiel 6A (Vergleich)

1467,8 g des Produktes aus Beispiel 6 wurden bei 80 °C mit 2,243 g 11,98 %iger Schwefelsäure versetzt und 1/2 h bei 80 °C verrührt. Nach Zugabe von 1,579 g Irganox^{®} 1076 wurde das Produkt 1 h bei 18 mbar (Wasserstrahlvakuum) und anschließend bei 110 °C und 1 mbar 3 h bei entwässert. Man erhielt ein klares Produkt.

### Beispiel 6B

1661 g des Produktes aus Beispiel 6 wurden bei 80 °C mit 4,593 g 11,98 %iger Schwefelsäure versetzt und 1/2 h bei 80 °C verrührt. Nach Zugabe von 1,832 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 6C

1459,1 g des Produktes aus Beispiel 1 wurden bei 80 °C mit 4,258 g 11,98 %iger Schwefelsäure versetzt und ½ h bei 80 °C verrührt. Nach Zugabe von 1,620 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 7

In einen 10 1 Laborautoklaven wurden unter Stickstoffatmosphäre 13,56 g polymeres Alkoxylat 1 und 1215,2 g Trimethylolpropan gegeben. Der Autoklav wurde verschlossen und mit 1,9 bar Stickstoffdruck beaufschlagt. Man erwärmte unter Rühren (450 U/min) auf 150 °C und dosierte 4771,5 g Ethylenoxid bei einer Rührerdrehzahl von ebenfalls 450 U/min. über einen Zeitraum von 10,8 h in den Autoklaven. Während dieser Dosierzeit wurde die Dosierung 3 mal unterbrochen, man ließ abreagieren, senkte den Druck durch Ablassen des Stickstoffs auf 2,5 bar und nahm sodann die Ethylenoxiddosierung wieder auf. Nach Ende der Ethylenoxiddosierung schloss sich eine Nachreaktionszeit von 1 h Dauer an. Nach einer Ausheizzeit von 30 min im Vakuum und Abkühlen auf Raumtemperatur wurden dem Ansatz 3 Anteile (Beispiele 7A, 7B und 7C) für Neutralisationsversuche entnommen. Die auf KOH berechnete Katalysatorkonzentration betrug 100 ppm.

### Beispiel 7A

2783 g des Produktes aus Beispiel 7 wurden bei 80 °C mit 3,690 g 11,89 %iger Schwefelsäure versetzt und 1/2 h bei 80 °C verrührt. Nach Zugabe von 1,401 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 7B (Vergleich)

1015,7 g des Produktes aus Beispiel 7 wurden bei 80 °C mit 0,762 g 11,89 %iger Schwefelsäure versetzt und 1 h bei 80 °C verrührt. Nach Zugabe von 0,515 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 7C (Vergleich)

987,1 g des Produktes aus Beispiel 7 wurden bei 80 °C mit 0,202 g 85 %iger Phosphorsäure versetzt und 1 h bei 80 °C verrührt. Nach Zugabe von 0,495 g Irganox^{®} 1076 wurde das Produkt 1 h bei 18 mbar (Wasserstrahlvakuum) und anschließend bei 110 °C und 1 mbar 3 h entwässert. Man erhielt ein leicht trübes Produkt.

### Beispiel 8

In einen 10 1 Laborautoklaven wurden unter Stickstoffatmosphäre 688,83 g Sorbit und 2,185 g einer 44,82 gew.-%igen Lösung von KOH in Wasser gegeben. Der Autoklav wurde verschlossen und sein Inhalt bei 110 °C über einen Zeitraum von 3 h und bei einer Rührerdrehzahl von 450 U/min im Vakuum mit 100 ml Stickstoff pro Minute gestrippt. Man gab bei etwa 110 °C unter Stickstoffatmosphäre 3296,0 g Sojaöl zu und erwärmte unter Rühren (450 U/min) auf 130 °C. Der Druck wurde mit Stickstoff auf 2,5 bar eingestellt. Bei 130°C wurden 2021,5 g Ethylenoxid über einen Zeitraum von 6,09 h so in den Autoklaven dosiert, dass ein Gesamtdruck von 5 bar nicht überschritten wurde. Nach Ende der Ethylenoxiddosierung schloss sich eine Nachreaktionszeit von 5,82 h Dauer an. Die Katalysatorkonzentration (KOH) betrug 163 ppm. Nach einer Ausheizphase von 30 min. Dauer im Vakuum und Abkühlen auf 40 °C wurden 12,95 g einer 11,89 %igen Schwefelsäure zugegeben und 1 h bei 40 °C verrührt. Nach Zugabe von 2,904 g Irganox^{®} 1076 wurde das Produkt 1 h bei 18 mbar (Wasserstrahlvakuum) und 40 °C und anschließend bei 110 °C und 1 mbar 3 h entwässert. Man erhielt ein klares Produkt.

### Beispiel 9

In einen 10 1 Laborautoklaven wurden unter Stickstoffatmosphäre 1200 g polymeres Alkoxylat 2 und 79,8 g Glycerin gegeben. Der Autoklav wurde verschlossen, unter Rühren (450 U/min) auf 150 °C erwärmt und mit 2,7 bar Stickstoffdruck beaufschlagt. Bei 150°C wurden 4721,6 g Ethylenoxid bei einer Rührerdrehzahl von ebenfalls 450 U/min. über einen Zeitraum von 8,1 h in den Autoklaven dosiert. Während dieser Dosierzeit wurde die Dosierung einmal unterbrochen, man ließ abreagieren, senkte den Druck durch Ablassen des Stickstoffs auf 2,5 bar und nahm sodann die Ethylenoxiddosierung wieder auf. Nach Ende der Ethylenoxiddosierung schloss sich eine Nachreaktionszeit von 1 h Dauer an. Nach einer Ausheizzeit von 30 min im Vakuum und Abkühlen auf Raumtemperatur wurden dem Ansatz 2 Anteile (Beispiele 9A und 9B) für Neutralisationsversuche entnommen. Die auf KOH berechnete Katalysatorkonzentration betrug 280 ppm.

### Beispiel 9A

1488,9 g des Produktes aus Beispiel 9 wurden bei 80 °C mit 5,524 g 11,89 %iger Schwefelsäure versetzt und 1 h bei 80 °C verrührt. Nach Zugabe von 0,748 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 9B (Vergleich)

1523,2 g des Produktes aus Beispiel 9 wurden bei 80 °C mit 3,169 g 11,89 %iger Schwefelsäure versetzt und 1 h bei 80 °C verrührt. Nach Zugabe von 0,750 g Irganox^{®} 1076 wurde das Produkt 1 h bei 18 mbar (Wasserstrahlvakuum) und anschließend bei 110 °C und 1 mbar 3 h entwässert. Man erhielt ein leicht trübes Produkt.

### Beispiel 10

In einen 10 1 Laborautoklaven wurden unter Stickstoffatmosphäre 642,3 g Diethylenglykol und 2,727 g einer 44,82 %igen Lösung von KOH in Wasser gegeben. Der Autoklav wurde verschlossen und sein Inhalt bei 110 °C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150 °C und beaufschlagte mit 2,5 bar Stickstoffdruck. Bei 150°C wurde ein Gemisch aus 4068,6 g Ethylenoxid und 1056,2 g Propylenoxid bei einer Rührerdrehzahl von ebenfalls 450 U/min. über einen Zeitraum von 6,9 h in den Autoklaven dosiert. Während dieser Dosierzeit wurde die Dosierung bei Erreichen von 5 bar Reaktordruck zweimal unterbrochen, man ließ jeweils abreagieren, senkte den Druck durch Ablassen des Stickstoffs auf 2,5 bar und nahm sodann die Alkylenoxiddosierung wieder auf. Nach der Alkylenoxiddosierphase schloss sich eine Nachreaktionszeit von 2 h Dauer an. Nach einer Ausheizzeit von 30 min im Vakuum und Abkühlen auf Raumtemperatur wurden dem Ansatz 2 Anteile (Beispiele 10A und 10B) für Neutralisationsversuche entnommen. Die auf KOH berechnete Katalysatorkonzentration betrug 201 ppm.

### Beispiel 10A

1240 g des Produktes aus Beispiel 10 wurden bei 80 °C mit 3,142 g 11,82 %iger Schwefelsäure versetzt und 1 h bei 80 °C verrührt. Nach Zugabe von 0,629 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 10B (Vergleich)

1297,6 g des Produktes aus Beispiel 10 wurden bei 80 °C mit 1,928 g 11,82 %iger Schwefelsäure versetzt und 1 h bei 80 °C verrührt. Nach Zugabe von 0,655 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 11

In einen 10 1 Laborautoklaven wurden unter Stickstoffatmosphäre 325,5 g Sorbit und 3,075 g einer 44,82 %igen Lösung von KOH in Wasser gegeben. Der Autoklav wurde verschlossen und sein Inhalt bei 110 °C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150 °C und dosierte über einen Zeitraum von 3,22 h 1135,1 g Propylenoxid so in den Autoklaven, dass ein konstanter Druck von 5 bar erreicht wurde. Nach einer Nachreaktionszeit von 2,45 h wurden der Reaktordruck mit Stickstoff auf 2,7 bar eingestellt und 4540,2 g Ethylenoxid über einen Zeitraum von 9,07 h eindosiert. Während dieser Dosierzeit wurde die Dosierung bei Erreichen von 5 bar Reaktordruck zweimal unterbrochen, man ließ jeweils abreagieren, senkte den Druck durch Ablassen des Stickstoffs auf 2,5 bar und nahm sodann die Alkylenoxiddosierung wieder auf. Nach Ende der Ethylenoxiddosierung schloss sich eine Nachreaktionszeit von 1,5 h Dauer an. Nach einer Ausheizzeit von 30 min im Vakuum wurde auf Raumtemperatur abgekühlt. Die auf KOH berechnete Katalysatorkonzentration betrug 230 ppm. 2006,2 g des Produktes wurden bei 80 °C mit 6,475 g 11,82 %iger Schwefelsäure versetzt und 0,5 h bei 80 °C verrührt. Nach Zugabe von 1,028 g Irganox^{®} 1076 wurde das Produkt bei 110 °C 3 h bei 1 mbar entwässert. Man erhielt ein klares Produkt.

### Beispiel 12

In einen 10 l Laborautoklaven wurden unter Stickstoffatmosphäre 821,9 g Glycerin und 1,609 g einer 44,82 %igen Lösung von KOH in Wasser gegeben. Der Autoklav wurde verschlossen und sein Inhalt bei 110 °C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150 °C und dosierte über einen Zeitraum von 11,67 h 4150,1 g Propylenoxid so in den Autoklaven, dass ein konstanter Druck von 5 bar erreicht wurde. Nach einer Nachreaktionszeit von 9,3 h wurde der Reaktordruck mit Stickstoff auf 2,6 bar eingestellt und 1037,5 g Ethylenoxid über einen Zeitraum von 4,25 h ebenfalls so eindosiert, dass ein Gesamtdruck von 5 bar nicht überschritten wurde. Nach Ende der Ethylenoxiddosierung schloss sich eine Nachreaktionszeit von 3,18 h Dauer an. Nach einer Ausheizzeit von 30 min im Vakuum wurde auf Raumtemperatur abgekühlt. Die auf KOH berechnete Katalysatorkonzentration betrug 120 ppm. Dem Ansatz wurden 2 Anteile für Neutralisationsversuche (Beispiele 12A und 12B) entnommen.

### Beispiel 12A

1080,6 g des Produktes aus Beispiel 12 wurden unter Stickstoffatmosphäre bei 80 °C mit 1,918 g 11,82 %iger Schwefelsäure versetzt und 1 h bei 80 °C verrührt. Nach Zugabe von 0,543 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 12B (Vergleich)

1129,3 g des Produktes aus Beispiel 12 wurden unter Stickstoffatmosphäre bei 80 °C mit 1,002 g 11,80 %iger Schwefelsäure versetzt und 1 h bei 80 °C verrührt. Nach Zugabe von 0,567 g Irganox^{®} 1076 wurde das Produkt 1 h bei 18 mbar (Wasserstrahlvakuum) und anschließend bei 110 °C und 1 mbar 3 h entwässert. Man erhielt ein trübes Produkt.

### Beispiel 13

In einen 10 l Laborautoklaven wurden unter Stickstoffatmosphäre 820,7 g Glycerin und 1,471 g einer 44,82 %igen Lösung von KOH in Wasser gegeben. Der Autoklav wurde verschlossen und sein Inhalt bei 110 °C über einen Zeitraum von 3 h und bei einer Rührerdrehzahl von 450 U/min im Vakuum mit 50 ml Stickstoff pro Minute gestrippt. Man erwärmte unter Rühren (450 U/min) auf 150 °C und beaufschlagte den Autoklaven mit 2,5 bar Stickstoffdruck. Sodann dosierte man über einen Zeitraum von 10,53 h ein Gemisch aus 1289,2 g Propylenoxid und 3884,5 g Ethylenoxid so in den Autoklaven, dass maximal ein Druck von 5 bar erreicht wurde. Nach Ende der Alkylenoxiddosierung schloss sich eine Nachreaktionszeit von 3,25 h Dauer an. Nach einer Ausheizzeit von 30 min im Vakuum wurde auf Raumtemperatur abgekühlt. Die auf KOH berechnete Katalysatorkonzentration betrug 110 ppm. 2417,1 g des Rektionsproduktes wurden unter Stickstoffatmosphäre bei 80 °C mit 3,547 g 11,80 %iger Schwefelsäure versetzt und 1 h bei 80 °C verrührt. Nach Zugabe von 1,210 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

In der folgenden Tabelle sind die Verhältnisse der während der Neutralisationen erreichten Dissoziationsstufen als Salzgehalte angegeben; die Angabe x mol-% K₂SO₄ besagt beispielsweise, dass von x mol-% der eingesetzten Schwefelsäure beide Protonen im Neutralisationsprozess wirksam wurden.

| **Beispiel** | **Molverhältnis der entstandenen Salze** | **Gemessener Basengehalt [ppm KOH]** | **Gemessene Säurezahl [ppm KOH]** | **Gemessene OH-Zahl [mg KOH / g]** | **Aussehen** |
|---|---|---|---|---|---|
| 1 A | 96,3 mol-% K₂SO₄; 3,7 mol-% | 98 | 14 | 256 | trüb |
| (Vergleich) | KHSO₄ | | | | |
| 1B | 18 mol-% K₂SO₄, 82 mol-% | 33 | 16 | 258 | klar |
| | KHSO₄ | | | | |
| 2A | 18 mol-% K₂SO₄, 82 mol-% | 46 | 64 | 260 | klar |
| | KHSO₄ | | | | |
| 2B | 100 mol% KH₂PO₄ | 187 | 153 | 260 | trüb |
| 3 | 18 mol-% K₂SO₄, 82 mol-% | 31 | 68 | 625 | klar |
| | KHSO₄ | | | | |
| 4A | 33 mol-% K₂SO₄, 67 mol-% | Nicht | 51 | 548 | trüb |
| (Vergleich) | KHSO₄ | bestimmt | | | |
| 4B | 13 mol-% K₂SO₄, 87 mol-% | Nicht | 37 | 548 | trüb |
| (Vergleich) | KHSO₄ | bestimmt | | | |
| 4C | 100 mol% KHSO₄ | Nicht | 42 | 549 | leicht |
| (Vergleich) | | bestimmt | | | trüb |
| 5 | 100 mol-% KHSO₄ | 0,2 | 71 | 249 | klar |
| 6A | 91 mol-% K₂SO₄, 9 mol-% | 108 | 11 | 253 | klar |
| (Vergleich) | KHSO₄ | | | | |
| 6B | 5 mol-% K₂SO₄, 95 mol-% | 2 | 17 | 253 | klar |
| | KHSO₄ | | | | |
| 6C | 100 mol-% KHSO₄, | 8 | 16 | 253 | klar |
| 7A | 11 mol-% K₂SO₄, 89 mol% | 9 | 17 | 255 | klar |
| | KHSO₄ | | | | |
| 7B | 95 mol-% K₂SO₄, 5 mol-% | 63 | 16 | 256 | klar |
| (Vergleich) | KHSO₄ | | | | |
| 7C | 100 mol-% KH₂PO₄, | 95 | 11 | 255 | leicht |
| (Vergleich) | | | | | trüb |
| 8 | 89 mol-% KHSO₄, | n. d. | 170 | 211 | klar |
| | 11 mol-% K₂SO₄ | | | | |
| 9A | 89 mol-% KHSO₄, | 19 | 16 | 252 | klar |
| | 11 mol% K₂SO₄ | | | | |
| 9B | 2 mol-% KHSO₄, | 128,3 | 15,3 | 253 | leicht |
| (Vergleich) | 98 mol-% K₂SO₄ | | | | trüb |
| 10A | 83 mol-% KHSO₄ | 36 | 22 | 111,8 | klar |
| | 17 mol-% K₂SO₄ | | | | |
| 10B | 100 mol-% K₂SO₄ | 108 | 10 | 112,1 | klar |
| (Vergleich) | | | | | |
| 11 | 95 mol-% KHSO₄ | 32 | 37 | 100,3 | klar |
| | 5 mol-% K₂SO₄ | | | | |
| 12A | 100 mol-% KHSO₄ | < Blindwert | 19 | 248 | klar |
| 12B | 100 mol-% K₂SO₄ | 61 | 10 | 248 | trüb |
| (Vergleich) | | | | | |
| 13 | 11 mol-% K₂SO₄; 89 mol-% | 7 | 9 | 249 | klar |
| | KHSO₄ | | | | |

## Patentansprüche

1. Verfahren zur Herstellung von Polyolen durch basenkatalysierte Addition von Alkylenoxiden, wobei der Anteil von Ethylenoxid an den Alkylenoxiden mindestens 10 Gew.-% beträgt, an mehrfunktionelle Starterverbindungen mit Zerewitinoffaktiven Wasserstoffatomen in Gegenwart von Katalysatoren auf Basis von Alkalimetallhydroxiden, Alkali-, Erdalkalimetallhydriden, Alkali-, Erdalkalimetallcarboxylaten oder Erdakalihydroxiden in auf die Endproduktmenge bezogenen Konzentrationen von 0,004 bis 0,5 Gew.-%, bei dem die Neutralisation der alkalischen polymerisationsaktiven Zentren des rohen Alkylenoxidadditionsproduktes durch Zugabe von Schwefelsäure derart durchgeführt wird, dass von 66 mol-% bis 100 mol-% der eingesetzten Säure nur die erste Dissoziationsstufe zur Neutralisation der im Rohpolymerisat enthaltenden Katalysatormenge wirksam wird.

2. Verfahren gemäß Anspruch 1, bei dem vor oder während der Addition der Alkylenoxide 10 bis 80 Gew.-%, bezogen auf die Endproduktmenge, Triglyceride zugesetzt werden.

## Claims

1. Process for preparing polyols by base-catalysed addition of alkylene oxides, where the proportion of ethylene oxide in the alkylene oxides is at least 10% by weight, onto polyfunctional starter compounds having Zerevitinov-active hydrogen atoms in the presence of catalysts based on alkali metal hydroxides, alkali metal or alkaline earth metal hydrides, alkali metal or alkaline earth metal carboxylates or alkaline earth metal hydroxides in concentrations, based on the amount of end product, of 0.004 to 0.5% by weight, in which the neutralization of the alkaline polymerization-active sites of the crude alkylene oxide addition product is performed by addition of sulphuric acid in such a way that, from 66 mol% to 100 mol% of the acid used, only the first dissociation stage is active in the neutralization of the amount of catalyst present in the crude polymer.

2. Process according to Claim 1, in which 10 to 80% by weight, based on the amount of end product, of triglycerides are added before or during the addition of the alkylene oxides.

## Revendications

1. Procédé pour la préparation de polyols par addition catalysée par des bases d'oxydes d'alkylène, la proportion d'oxyde d'éthylène par rapport aux oxydes d'alkylène valant au moins 10% en poids, sur des composés de départ polyfonctionnels comprenant des atomes d'hydrogène actifs selon Zerewitinoff en présence de catalyseurs à base d'hydroxydes de métal alcalin, d'hydrures de métal alcalin et alcalino-terreux, de carboxylates de métal alcalin et alcalino-terreux ou d'hydroxydes de métal alcalino-terreux en des concentrations, par rapport à la quantité de produit fini, de 0,004 à 0,5% en poids, dans lequel la neutralisation des centres alcalins actifs en polymérisation du produit d'addition d'oxyde d'alkylène brut est réalisée par addition d'acide sulfurique de manière telle que des 66% en mole à 100% en mole de l'acide utilisé, seul le premier étage de dissociation devient actif pour la neutralisation de la quantité de catalyseur contenue dans le polymère brut.

2. Procédé selon la revendication 1, dans lequel on ajoute, avant ou pendant l'addition des oxydes d'alkylène, 10 à 80% en poids, par rapport à la quantité de produit fini, de triglycérides.
